# FASCICULE DE BREVET EUROPEEN

(11) **EP 3 996 995 B1**
(45) Date de publication et mention de la délivrance du brevet: **30.08.2023**
(21) Numéro de dépôt: 20750328.5
(22) Date de dépôt: 08.07.2020
(51) Int. Cl.: B64D 27/24

(54) **ARCHITECTURE PROPULSIVE ÉLECTRIQUE POUR UN AÉRONEF À DÉCOLLAGE ET ATTERRISSAGE VERTICAL MULTI-ROTORS ET PROCÉDÉ DE CONTRÔLE D'UNE TELLE ARCHITECTURE**
ELEKTRISCHE PROPULSIVE ARCHITEKTUR FÜR EIN MEHRROTOR VERTIKALES START- UND LANDFLUGZEUG UND VERFAHREN ZUR STEUERUNG DIESER ARCHITEKTUR
ELECTRIC PROPULSIVE ARCHITECTURE FOR A MULTI-ROTOR VERTICAL TAKE-OFF AND LANDING AIRCRAFT AND CONTROL METHOD OF SUCH ARCHITECTURE

(30) Priorité: 09.07.2019 FR 1907667
(43) Date de publication de la demande: 18.05.2022
(73) Titulaire: SAFRAN, 75015 Paris (FR)
(72) Inventeur: LEVEL, Clélia, 77550 MOISSY-CRAMAYEL (FR); MAURY, Christophe, 77550 MOISSY-CRAMAYEL (FR); MEUNIER, René, 77550 MOISSY-CRAMAYEL (FR); THORAVAL, Bruno, 77550 MOISSY-CRAMAYEL (FR)
(74) Mandataire: Gevers & Orès
(86) Numéro de dépôt international: PCT/FR2020/051213
(87) Numéro de publication internationale: WO 2021/005304

(56) Documents cités:
- EP-A1- 3 208 909
- WO-A1-2017/114643
- US-A1- 2017 203 839

## Description

### DOMAINE TECHNIQUE DE L'INVENTION

L'invention se rapporte à une architecture propulsive électrique pour un aéronef à décollage et atterrissage vertical (connu sous l'acronyme VTOL de l'expression anglaise « Vertical Take-Off and Landing ») multi-rotors comprenant au moins deux moteurs électriques par rotor de l'hélicoptère, l'un fonctionnant dans un mode actif, l'autre étant en mode de veille, et à un procédé de contrôle d'une telle architecture.

### ARRIÈRE-PLAN TECHNIQUE

L'état de la technique comprend notamment les documents US-A1-2017/203839, EP-A1-3 208 909 et WO-A1-2017/114643.

De façon connue, des aéronefs peuvent être utilisés en milieu urbain. Toutefois, cette utilisation des aéronefs impose des objectifs stricts en termes de sécurité et d'émissions polluantes et sonores.

Les hélicoptères mono-rotor comportant un seul moteur électrique pour le rotor, et ont des capacités de décollage et d'atterrissage vertical. Toutefois, les architectures conventionnelles de ces hélicoptères ne répondent pas aux objectifs de sécurité et d'émissions. Une architecture est la définition d'une installation.

Les architectures propulsives distribuées de tels hélicoptères sont toutefois indispensables pour garantir les objectifs en cas de panne. De plus, la distribution électrique de tels hélicoptères s'impose pour des problématiques de masse.

Il existe également des aéronefs multi-rotors comportant un seul moteur électrique par rotor.

Toutefois, les architectures conventionnelles de ces aéronefs comprenant un seul moteur électrique par rotor ne permettent pas d'être robuste à la double panne électrique.

De plus, des reconfigurations dans le réseau électrique de l'hélicoptère ou de l'aéronef augmentent la quantité d'éléments de distribution dans le coeur électrique de l'hélicoptère ou de l'aéronef, notamment par l'ajout de contacteurs. Ceci a pour conséquences une augmentation de la complexité et de la masse du système de propulsion électrique de l'hélicoptère ou de l'aéronef.

L'invention a pour objectif de proposer une solution permettant de remédier à au moins certains de ces inconvénients.

En particulier, la présente invention propose un aéronef à décollage et atterrissage vertical multi-rotors à propulsion électrique qui permet de satisfaire les exigences de sécurité et d'émissions polluantes et sonores en milieu urbain.

### RÉSUMÉ DE L'INVENTION

La présente invention propose, afin de répondre aux problématiques de masse et de double panne électrique, un aéronef à décollage et atterrissage vertical multi-rotors comprenant plus d'un moteur électrique par rotor de l'aéronef. L'invention ne propose avantageusement pas de reconfiguration lourde et complexe du système de propulsion électrique.

À cet effet, l'invention concerne une architecture propulsive électrique pour un aéronef à décollage et atterrissage vertical multi-rotors, comprenant :
- N générateurs électriques, N étant un entier supérieur ou égal à 2,
- N paires de rotors,
- pour chaque rotor, un premier moteur électrique et un deuxième moteur électrique, le premier moteur électrique étant configuré pour fonctionner dans un mode actif et le deuxième moteur électrique étant configuré pour être dans un mode de veille et étant apte à fonctionner dans un mode actif en situation de panne,
- pour chaque rotor, une hélice accouplée aux premier et deuxième moteurs électriques de sorte qu'en fonctionnement le premier moteur électrique entraîne l'hélice,

dans laquelle pour chaque paire de rotors, un des N
   générateurs électriques alimente les premiers moteurs électriques des rotors d'une paire de rotors, et un autre des N
   générateurs électriques alimente les deuxièmes moteurs électriques des rotors d'une paire de rotors, et dans laquelle les rotors forment des contra-rotors, et pour chaque contra-rotor, les premier et deuxième moteurs électriques des rotors de chaque contra-rotor sont chacun alimentés par un des N
   générateurs électriques, de sorte que les N générateurs électriques alimentent les premier et deuxième moteurs électriques des rotors de chaque contra-rotor.

Selon l'invention, une paire de rotor comprend deux rotors qui sont appairés à une même source de puissance, ici deux générateurs électriques.

Selon l'invention, un contra-rotor comprend deux rotors dont les hélices tournent dans le sens contraire l'une de l'autre.

Avantageusement, dans l'architecture selon l'invention, chaque rotor est apte à être alimenté en puissance par deux moteurs électriques. En effet, le premier moteur électrique alimente le rotor en fonctionnement nominal, et le deuxième moteur électrique est apte à alimenter le rotor en fonctionnement dégradé.

Ainsi, l'architecture selon l'invention est appelée architecture « dual motor rotor », signifiant architecture à double moteur par rotor.

Selon l'invention, chaque rotor peut être alimenté par deux générateurs électriques, et chaque paire de rotor peut être alimentée par deux générateurs électriques.

Selon un exemple, huit rotors sont regroupés en quatre contra-rotors, qui sont chacun alimentés par les quatre générateurs électriques. Ainsi, quatre moteurs électriques alimentés par un seul générateur électrique peuvent appartenir à quatre contra-rotors différents.

Le premier moteur électrique fonctionne dans un mode actif, et le deuxième moteur électrique est en mode « stand-by », c'est-à-dire en mode de veille. Le deuxième moteur électrique est apte à fonctionner en mode nominal, c'est-à-dire qu'il peut être activé en le sortant du mode de veille, en situation de panne.

En mode actif, un moteur électrique alimente un rotor.

En mode de veille, un moteur électrique n'alimente pas le rotor.

Par opposition à une configuration à deux moteurs électriques en mode actif qui offre une redondance active, le fait d'avoir un moteur électrique en mode actif et un moteur électrique en mode veille qui alimentent un rotor permet une meilleure ségrégation entre les chaînes de puissance redondantes et améliore la détectabilité des défaillances, notamment lorsque des actionneurs redondants intervenant à l'intérieur de boucles d'asservissement sont additionnés en force ou en couple.

En cas de panne d'un premier moteur électrique d'un rotor, d'un rotor ou d'un générateur électrique, le deuxième moteur électrique de chaque rotor peut être commuté en mode de fonctionnement actif. Ainsi, tous les deuxièmes moteurs électriques sont sortis du mode de veille et activés en cas de panne dans l'architecture. Dans ce cas, en fonctionnement, les premier et deuxième moteurs électriques entraînent l'hélice.

Ainsi, en cas de panne, il y a avantageusement une double activation de tous les moteurs électriques, ce qui permet une robustesse à la double panne électrique, sans commutation des sources.

En particulier, l'aéronef muni d'une architecture selon l'invention peut continuer à voler en cas de perte d'un rotor, voire même de deux rotors appairés.

Ceci permet avantageusement à l'aéronef de pouvoir terminer son vol en cas de situation dégradée, sans devoir sur-dimensionner les moteurs électriques, ni doubler la puissance totale installée dans l'aéronef.

Selon un exemple, les rotors forment des contra-rotors qui sont chacun alimentés en énergie électrique par une pluralité, par exemple quatre, générateurs électriques, les générateurs électriques étant ségrégés.

Ceci permet avantageusement une robustesse en performances nominales à la panne simple électrique, ainsi qu'une robustesse en performances dégradées à la panne double électrique ou à la perte d'un rotor. Ceci permet également un affranchissement des reconfigurations par la ségrégation en canaux de puissance, et un mode commun de défaillance minimisé par la redondance passive en fonctionnement nominal.

Il y a de façon avantageuse une ségrégation électrique totale entre les chaînes de puissance, c'est-à-dire entre les générateurs électriques et les moteurs électriques des rotors. Ainsi, il n'y a pas de transfert d'énergie électrique entre une source d'énergie électrique et une autre, c'est-à-dire entre les générateurs électriques ou les moteurs électriques. En effet, il n'y a aucun contact, aucune interconnexion entre les canaux de puissance formés par les générateurs électriques.

L'architecture peut également comprendre des moyens de stockage d'énergie électrique qui alimentent les générateurs électriques, ou des moyens de stockage d'énergie chimique, en cas de turbogénérateur.

Les générateurs électriques peuvent comprendre au moins une batterie, ou une pile à combustible, ou un turbogénérateur.

Les premier et deuxième moteurs électriques de chaque rotor peuvent avoir des dimensions différentes. En particulier, les premier et deuxième moteurs électriques peuvent avoir des puissances différentes. Par exemple, la puissance du deuxième moteur électrique peut être comprise entre 50 % et 80 % de la puissance du premier moteur électrique, notamment égale à environ 60% de la puissance du premier moteur électrique.

Ainsi, il y a une asymétrie de puissance des deux moteurs électriques alimentant un même rotor.

Ceci permet avantageusement d'effacer l'inconvénient de la masse pour la redondance des moteurs électriques.

Les premier et deuxième moteurs électriques peuvent être distincts l'un de l'autre. En variante, les premier et deuxième moteurs électriques ne sont pas distincts l'un de l'autre.

Les rotors d'une paire de rotors peuvent être agencés diagonalement opposés dans l'aéronef.

Les contra-rotors peuvent être agencés diagonalement opposés avec symétrie centrale dans l'aéronef.

Ce positionnement particulier des contra-rotors permet, en cas de panne dans l'architecture, de compenser la panne et d'équilibrer la puissance au sein de l'architecture, et donc de permettre à l'aéronef de pouvoir terminer son vol. L'architecture peut également comprendre des bus de communication connectés entre chaque générateur électrique et les moteurs électriques qui sont alimentés par ce générateur électrique.

Un tel bus de communication permet de répartir la puissance issue d'un générateur électrique aux moteurs électriques entraîné en fonctionnement par ce générateur électrique.

L'invention concerne également un aéronef à décollage et atterrissage vertical multi-rotors comprenant une architecture propulsive électrique selon l'invention. L'invention concerne également un procédé de contrôle d'une architecture propulsive électrique pour un aéronef à décollage et atterrissage vertical multi-rotors selon l'invention, comprenant les étapes consistant en, pour chaque rotor :
- un fonctionnement du premier moteur électrique dans un mode actif, et
- un fonctionnement du deuxième moteur électrique dans un mode de veille.

Le procédé selon l'invention peut également comprendre l'étape consistant en, en cas de panne d'un premier moteur électrique d'un rotor, d'un rotor ou d'un générateur électrique, une sortie du fonctionnement dans un mode de veille du deuxième moteur électrique de chaque rotor, puis un fonctionnement du deuxième moteur électrique de chaque rotor dans un mode actif.

Ainsi, en cas de fonctionnement dégradée, tous les deuxièmes moteurs électriques en mode « standby » sont activés afin de compenser la situation dégradée.

L'invention permet ainsi, en cas de panne, de repérer facilement quel canal de puissance est la cause de la panne. Ceci permet de faciliter la détection et l'isolation d'une panne au sein de l'architecture.

### BRÈVE DESCRIPTION DES FIGURES

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1] la figure 1 représente une architecture propulsive électrique pour un aéronef VTOL multi-rotors selon un mode de réalisation de l'invention, ici une architecture à double moteur par rotor pour un octocoptère,
[Fig. 2] la figure 2 représente une configuration des rotors pour l'architecture à double moteur par rotor pour un octocoptère de la figure 1,
[Fig. 3] la figure 3 représente une autre configuration des rotors pour l'architecture à double moteur par rotor pour un octocoptère de la figure 1,
[Fig. 4] la figure 4 représente le point de vue d'un rotor pour l'architecture à double moteur par rotor pour un octocoptère de la figure 1, et
[Fig. 5] la figure 5 représente le point de vue d'un générateur pour l'architecture à double moteur par rotor pour un octocoptère de la figure 1,

Les éléments ayant les mêmes fonctions dans les différentes mises en oeuvre ont les mêmes références dans les figures.

### DESCRIPTION DÉTAILLÉE DE L'INVENTION

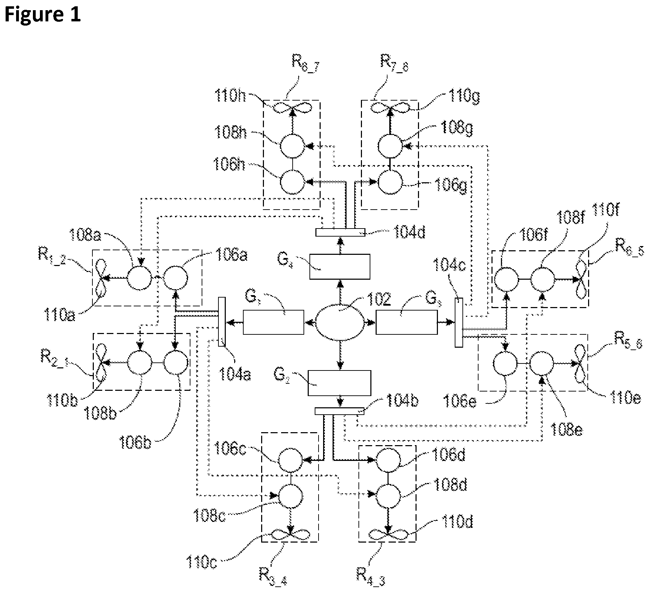

La figure 1 représente une architecture propulsive électrique pour un aéronef VTOL multi-rotors, et plus précisément une architecture propulsive électrique pour un octocoptère, c'est-à-dire un aéronef à huit rotors de sustentation.

L'architecture comporte des moyens de stockage d'énergie électrique 102 qui alimentent des générateurs électriques G1-G4, ici au nombre de quatre.

Les générateurs électriques G1-G4 peuvent être des batteries, ou des piles à combustibles, ou encore des turbogénérateurs.

Les générateurs électriques G1-G4 sont reliés à des bus de communication 104a-d.

L'architecture comporte des rotors R1_2, R2_1, R3_4, R4_3, R5_6, R6_5, R7_8 et R8_7, ici au nombre de huit. Chaque rotor comporte deux moteurs électriques 106a-h et 108ah, et une hélice 110a-h. Une hélice est accouplée aux moteurs électriques d'un rotor de sorte qu'en fonctionnement le premier moteur électrique 106a-h entraîne l'hélice.

Un moteur électrique est relié à un générateur électrique de sorte qu'en fonctionnement ledit générateur électrique alimente ledit moteur électrique, notamment via un bus de communication. Ainsi, chaque moteur électrique est alimenté en puissance par un générateur électrique.

En particulier, le bus de communication 104a est connecté entre le générateur électrique G1 et les moteurs électriques 106a, 106b, 108c, 108d qui sont alimentés par ce générateur électrique.

Le bus de communication 104b est connecté entre le générateur électrique G2 et les moteurs électriques 106c-d, 108e-f qui sont alimentés par ce générateur électrique.

Le bus de communication 104c est connecté entre le générateur électrique G3 et les moteurs électriques 106e-f, 108g-h qui sont alimentés par ce générateur électrique.

Et enfin, le bus de communication 104d est connecté entre le générateur électrique G4 et les moteurs électriques 106g-h, 108a-b qui sont alimentés par ce générateur électrique.

Le premier moteur électrique de chaque rotor fonctionne dans un mode actif et le deuxième moteur électrique de chaque rotor est en mode de veille. Ainsi, chaque rotor est alimenté en puissance électrique par le premier moteur électrique en mode actif. Les huit rotors sont groupés en paires de rotors R1_2 - R2_1, R3_4 - R4_3, R5_6, - R6_5 et R7_8 - R8_7. Pour chaque paire de rotors, les premiers moteurs électriques des rotors d'une paire de rotors sont alimentés par un des générateurs électriques, et les deuxièmes moteurs électriques des rotors d'une paire de rotors sont alimentés par un autre des générateurs électriques.

Par exemple, les premiers moteurs électriques 106a-b de la paire de rotors R1_2 - R2_1 sont alimentés par le générateur électrique G1 et les deuxièmes moteurs électriques 108a-b de la paire de rotors R1_2 - R2_1 sont alimentés par le générateur électrique G4. De même, les premiers moteurs électriques 106c-d de la paire de rotors R3_4 - R4_3 sont alimentés par le générateurs électrique G2 et les deuxièmes moteurs électriques 108c-d de la paire de rotors R3_4 - R4_3 sont alimentés par le générateur électrique G1 ; les premiers moteurs électriques 106e-f de la paire de rotors R5_6 - R6_5 sont alimentés par le générateurs électrique G3 et les deuxièmes moteurs électriques 108e-f de la paire de rotors R5_6 - R6_5 sont alimentés par le générateur électrique G2 ; et les premiers moteurs électriques 106g-h de la paire de rotors R7_8 - R8_7 sont alimentés par le générateur électrique G4, et les deuxièmes moteurs électriques 108g-h de la paire de rotors R7_8 - R8_7 sont alimentés par le générateur électrique G3.

Les huit rotors sont groupés en quatre contra-rotors, chacun alimenté par quatre générateurs électriques. Par exemple, les rotors R1_2 et R6_5 forment un contra-rotor alimenté par les générateurs électriques G1-G4. De même, les rotors R2_1 et R5_6 forment un contra-rotor alimenté par les générateurs électriques G1-G4; les rotors R8_7 et R3_4 forment un contra-rotor alimenté par les générateurs électriques G1-G4 ; et les rotors R7_8 et R4_3 forment un contra-rotor alimenté par les générateurs électriques G1-G4.

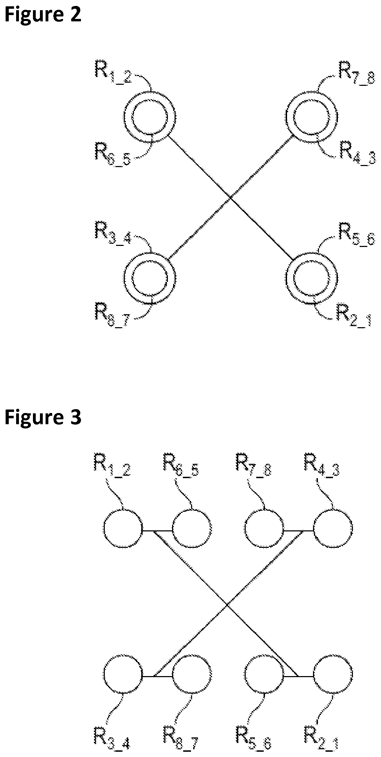

Les contra-rotors peuvent être diagonalement opposés, avec une symétrie centrale. Par exemple, comme représenté sur les figures 2 et 3, le contra-rotor R1_2 - R6_5 est opposé au contra-rotor R5_6 - R2_1 ; et le contra-rotor R3_4 - R8_7 est opposé au contra-rotor R4_3 - R7_8.

Les rotors d'une paire de rotors peuvent être diagonalement opposés et de sens de rotation opposés. Par exemple, comme représenté sur les figures 2 et 3, les paires de rotors R1_2 - R2_1, R3_4 - R4_3, R5_6 - R6_5 et R7_8 - R8_7 sont respectivement diagonalement opposées.

Chaque rotor peut être alimenté par deux générateurs électriques, chaque générateur électrique alimentant un des moteurs électriques du rotor. Chaque paire de rotors peut être alimentée par deux générateurs électriques. Par exemple, les rotors R1_2 et R2_1 forment une paire de rotors alimentée par les générateurs électriques G1, G4. De même, les rotors R3_4 et R4_3 forment une paire de rotors alimentée par les générateurs électriques G1, G2 ; les rotors R5_6 et R6_5 forment une paire de rotors alimentée par les générateurs électriques G2, G3 ; et les rotors R7_8 et R8_7 forment une paire de rotors alimentée par les générateurs électriques G3, G4.

Les quatre moteurs électriques alimentés par un générateur électrique peuvent appartenir à quatre contra-rotors différents. Par exemple, le générateur électrique G1 alimente un moteur électrique de chacun des quatre contra-rotors R1_2 - R6_5, R2_1 - R5_6, R3_4 - R8_7 et R4_3 - R7_8. De même, le générateur électrique G2 alimente un moteur électrique de chacun des quatre contra-rotors R3_4 - R8_7, R4_3 - R7_8, R5_6 - R2_1 et R6_5 - R1_2; le générateur électrique G3 alimente un moteur électrique de chacun des quatre contra-rotors R5_6 - R2_1, R6_5 - R1_2 ; R7_8 - R4_3 et R8_7 - R3_4 ; et le générateur électrique G4 alimente un moteur électrique de chacun des quatre contra-rotors R7_8 - R4_3, R8_7 - R3_4, R1_2 - R6_5 et R2_1 - R5_6.

Un rotor est alimenté en puissance par deux moteurs électriques, un premier moteur électrique étant en mode actif et un deuxième moteur électrique étant en mode veille.

En cas de fonctionnement nominal, seul le premier moteur électrique en mode actif alimente le rotor.

En cas de panne d'un premier moteur électrique, d'un rotor ou d'un générateur électrique, il y a une double activation des moteurs électriques. Autrement dit, en cas de panne, chaque rotor peut être alimenté en puissance par deux moteurs électriques. Plus précisément, pour palier à la perte d'alimentation en puissance d'un rotor via son moteur électrique en mode actif, tous les moteurs électriques en mode « stand-by » sont activés et alimentés par le générateur électrique associé. Ainsi, en cas de panne, les moteurs électriques fonctionnent donc en mode actif/actif, et non plus en mode actif/« standby ».

Les moteurs électriques en mode actif et en mode « stand-by » sont alimentés par deux générateurs électriques ségrégués. Ainsi, la perte d'un générateur électrique n'implique la perte d'aucun rotor. En effet, en cas de perte du générateur électrique G1, les moteurs électriques 108a-b alimentent les rotors R1_2 et R2_1, et les moteurs électriques 106c-d alimentent les rotors R3_4 et R4_3. En cas de perte du générateur électrique G2, les moteurs électriques 108c-d alimentent les rotors R3_4 et R4_3, et les moteurs électriques 106e-f alimentent les rotors R5_6 et R6_5. Les moteurs électriques 108e-f alimentent les rotors R5_6 et R6_5, et les moteurs électriques 106g-g alimentent les rotors R7_8 et R8_7 en cas de perte du générateur électrique G3. En cas de perte du générateur électrique G4, les moteurs électriques 108g-h alimentent les rotors R7_8 et R8_7, et les moteurs électriques 106a-b alimentent les rotors R1_2 et R2_1.

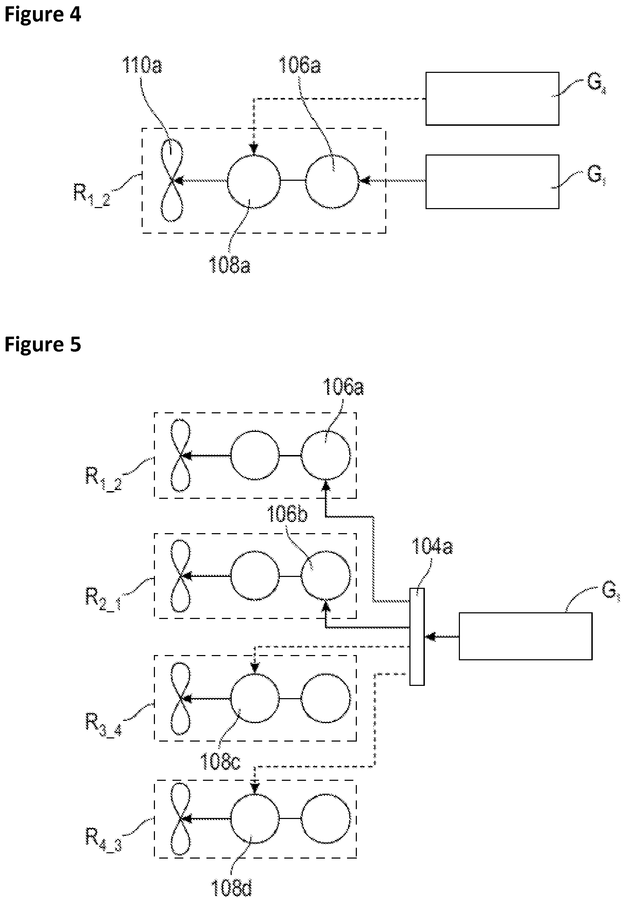

La figure 4 représente l'architecture du point de vue d'un rotor, par exemple le rotor R1_2.

Le rotor R1_2 est connecté aux moteurs électriques 106a, 108a, et en fonctionnement nominal, est alimenté en puissance seulement par le moteur électrique 106a. En cas de panne, c'est-à-dire en situation dégradée, le rotor R1_2 est alimenté en puissance par les premier et deuxième moteurs électriques 106a, 108a. Le générateur électrique G1 alimente le premier moteur électrique 106a, tandis que le générateur électrique G4 alimente le deuxième moteur électrique 108a. Les générateurs électriques G1 et G4 sont ségrégués. Un moteur électrique est ainsi alimenté par un seul générateur électrique.

Le premier moteur électrique 106a fonctionne dans un mode actif, tandis que le deuxième moteur électrique 108a fonctionne dans un mode de veille.

En cas de panne dans l'architecture, le deuxième moteur électrique 108a passe en mode actif, et donc fonctionne en régime nominal. Ainsi, le rotor R1_2 continue de fonctionner en cas de perte d'un moteur électrique ou d'un générateur électrique.

Le moteur électrique en mode « stand-by » est dimensionné pour assurer la robustesse de l'application VTOL à la double panne électrique.

Le moteur électrique fonctionnant en mode de veille est dimensionné pour fournir le complément de puissance nécessaire au rotor pour assurer les équilibres de force et de moment de l'aéronef.

En particulier, le deuxième moteur électrique 108a-h peut être apte à délivrer une puissance comprise entre 50 % et 80 %, notamment aux alentours de 60 %, de la puissance délivrée par le premier moteur électrique 106a-h.

Un générateur électrique peut alimenter une pluralité, par exemple quatre, moteurs électriques.

En cas de fonctionnement nominal, le générateur électrique alimente deux moteurs électriques en mode actif.

En cas de panne, le générateur électrique peut alimenter jusqu'à deux moteurs électriques en mode actif et deux moteurs électriques en mode « stand-by » passant en mode actif.

Les générateurs électriques alimentent des rotors caractérisés par leur position opposée de symétrie centrale, et par leur sens de rotation opposé. Ainsi, un générateur électrique alimente une paire de rotors qui sont agencés diagonalement opposés l'un à l'autre. En cas de panne, la puissance d'un générateur électrique ne peut pas être transférée à d'autres rotors, puisque les générateurs électriques sont ségrégués.

La figure 5 représente l'architecture du point de vue d'un générateur électrique, par exemple du générateur électrique G1.

En fonctionnement nominal, le générateur électrique G1 alimente, via le bus de communication 104a, le premier moteur électrique 106a en mode actif du rotor R1_2 et le premier moteur électrique 106b en mode actif du rotor R2_1. En cas de fonctionnement dégradé, le générateur électrique G1 alimente, via le bus de communication 104a, le deuxième moteur électrique 108c du rotor R3_4 et le deuxième moteur électrique 108d du rotor R4_3 qui passent du mode de veille au mode actif.

L'invention concerne également un procédé de contrôle de l'architecture selon l'invention.

Le procédé comprend, pour chaque rotor R1_2, R2_1, R3_4, R4_3, R5_6, R6_5, R7_8 et R8_7, une étape de fonctionnement du premier moteur électrique 106a-h du rotor dans un mode actif, et une étape de fonctionnement du deuxième moteur électrique 108a-h de ce rotor dans un mode de veille.

En cas de panne d'un moteur électrique, d'un rotor ou d'un générateur électrique, le procédé peut comprendre une étape de sortie du mode de veille du deuxième moteur électrique de tous les rotors, puis une étape de fonctionnement de tous les deuxièmes moteurs électriques dans un mode actif.

Par exemple, en cas de panne du moteur électrique 106a du rotor R1_2, le moteur électrique 108a est sorti de son mode de veille et passe en mode de fonctionnement actif, pour palier à la perte du moteur électrique 106a. Dans ce cas, les deuxièmes moteurs électriques 108b-h sont également sortis de leur mode de veille et passent en mode de fonctionnement actif.

En cas de perte du générateur électrique G1, les moteurs électriques 106a-b ne sont plus alimentés. Dans ce cas, les moteurs électrique 108a-b sont sortis de leur mode de veille et passent en mode de fonctionnement actif. Les moteurs électrique 108a-b sont alimentés par le générateur électrique G4. Dans ce cas, les deuxièmes moteurs électriques 108e-h sont également sortis de leur mode de veille et passent en mode de fonctionnement actif.

L'architecture propulsive électrique selon l'invention a été principalement décrite pour un octocoptère, mais peut être mise en oeuvre pour un aéronef VTOL comportant une pluralité de paires de rotors.

## Revendications

1. Architecture propulsive électrique pour un aéronef à décollage et atterrissage vertical multi-rotors, comprenant :
- N générateurs électriques (G1-G4), N étant un entier supérieur ou égal à 2,
- N paires de rotors (R1_2 - R2_1; R3_4 - R4_3 ; R5_6 - R6_5 ; R7_8 - R8_7),
**caractérisée en ce que** l'architecture comprend en outre:
- pour chaque rotor, un premier moteur électrique (106a-h) et un deuxième moteur électrique (108a-h), le premier moteur électrique (106a-h) étant configuré pour fonctionner dans un mode actif et le deuxième moteur électrique (108a-h) étant configuré pour être dans un mode de veille et étant apte à fonctionner dans un mode actif en situation de panne,
- pour chaque rotor, une hélice (110a-h) accouplée aux premier et deuxième moteurs électriques (106a-h, 108a-h) de sorte qu'en fonctionnement le premier moteur électrique (106a-h) entraîne l'hélice,
dans laquelle, pour chaque paire de rotors (R1_2 - R2_1 ; R3_4 - R4_3 ; R5_6 - R6_5 ; R7_8 - R8_7), un des N générateurs électriques alimente les premiers moteurs électriques (106a-h) des rotors d'une paire de rotors, et un autre des N générateurs électriques alimente les deuxièmes moteurs électriques (108a-h) des rotors d'une paire de rotors,
et dans laquelle les rotors forment des contra-rotors (R1_2 - R6_5 ; R2_1 - R5_6 ; R3_4 - R8_7 ; R4_3 - R7_8), et pour chaque contra-rotor, les premier et deuxième moteurs électriques (106a-h, 108a-h) des rotors de chaque contra-rotor sont chacun alimentés par un des N générateurs électriques (G1-G4) de sorte que les N générateurs électriques alimentent les premier et deuxième moteurs électriques (106a-h, 108a-h) des rotors de chaque contra-rotor.

2. Architecture selon la revendication précédente, dans laquelle en cas de panne d'un premier moteur électrique (106a-h) d'un rotor, d'un rotor (R1_2, R2_1, R3_4, R4_3, R5_6, R6_5, R7_8, R8_7), ou d'un générateur électrique (G1-G4), le deuxième moteur électrique (108a-h) de chaque rotor est configuré pour fonctionner dans un mode actif, et en fonctionnement les premier et deuxième moteurs électriques (106a-h, 108a-h) entraînent l'hélice (110a-h).

3. Architecture selon l'une des revendications précédentes, dans laquelle les générateurs électriques (G1-G4) comprennent au moins une batterie, ou une pile à combustible, ou un turbogénérateur.

4. Architecture selon l'une des revendications précédentes, dans laquelle les premier et deuxième moteurs électriques (106a-h, 108a-h) de chaque rotor (R1_2, R2_1, R3_4, R4_3, R5_6, R6_5, R7_8, R8_7) ont des dimensions différentes.

5. Architecture selon l'une des revendications précédentes, dans laquelle les rotors d'une paire de rotors sont agencés diagonalement opposés dans l'aéronef.

6. Aéronef à décollage et atterrissage vertical multi-rotors comprenant une architecture propulsive électrique selon l'une des revendications précédentes.

7. Procédé de contrôle d'une architecture propulsive électrique pour un aéronef à décollage et atterrissage vertical multi-rotors selon l'une des revendications 1 à 5, comprenant l'étape consistant en, pour chaque rotor :
- un fonctionnement du premier moteur électrique (106a-h) dans un mode actif,
ledit procédé étant **caractérisé en ce qu'**il comprend en outre l'étape consistant en, pour chaque rotor :
- un fonctionnement du deuxième moteur électrique (108a-h) dans un mode de veille.

8. Procédé selon la revendication précédente, comprenant l'étape consistant en, en cas de panne d'un premier moteur électrique (106a-h) d'un rotor, d'un rotor (R1_2, R2_1, R3_4, R4_3, R5_6, R6_5, R7_8, R8_7), ou d'un générateur électrique (G1-G4), une sortie du fonctionnement dans un mode de veille du deuxième moteur électrique (108a-h) de chaque rotor, puis un fonctionnement du deuxième moteur électrique (108a-h) de chaque rotor dans un mode actif.

## Patentansprüche

1. Elektrische propulsive Architektur für ein senkrecht startendes und landendes Luftfahrzeug mit mehreren Rotoren, umfassend:
- N elektrische Generatoren (G1-G4), wobei N eine ganze Zahl größer oder gleich 2 ist,
- N Rotorpaare (R1_2 - R2_1; R3_4 - R4_3; R5_6 - R6_5; R7_8 - R8_7), **dadurch gekennzeichnet, dass** die Architektur weiter umfasst:
- für jeden Rotor, einen ersten Elektromotor (106a-h) und einen zweiten Elektromotor (108a-h), wobei der erste Elektromotor (106a-h) dazu ausgelegt ist, in einem aktiven Modus betrieben zu werden, und der zweite Elektromotor (108a-h) dazu ausgelegt ist, in einem Schlafmodus zu sein und imstande ist, bei einem Defekt in einem aktiven Modus betrieben zu werden,
- für jeden Rotor, einen Propeller (110a-h), der mit dem ersten und dem zweiten Elektromotor (106a-h, 108a-h) gekoppelt ist, sodass im Betrieb der erste Elektromotor (106a-h) den Propeller antreibt,
wobei für jedes Rotorpaar (R1_2 - R2_1; R3_4 - R4_3; R5_6 - R6_5; R7_8 - R8_7) einer der N elektrischen Generatoren die ersten Elektromotoren (106a-h) der Rotoren eines Rotorpaars versorgt und ein anderer der N elektrischen Generatoren die zweiten Elektromotoren (108a-h) der Rotoren eines Rotorpaars versorgt,
und wobei die Rotoren Gegenrotoren (R1_2 - R6_5; R2_1 - R5_6; R3_4 - R8_7; R4_3 - R7_8) bilden und für jeden Gegenrotor der erste und der zweite Elektromotor (106a-h, 108a-h) der Rotoren jedes Gegenrotors jeweils von einem der N elektrischen Generatoren (G1-G4) versorgt wird, sodass die N elektrischen Generatoren den ersten und den zweiten Elektromotor (106a-h, 108a-h) der Rotoren jedes Gegenrotors versorgen.

2. Architektur nach dem vorstehenden Anspruch, wobei im Falle eines Defekts eines ersten Elektromotors (106a-h) eines Rotors, eines Rotors (R1_2, R2_1, R3_4, R4_3, R5_6, R6_5, R7_8, R8_7), oder eines elektrischen Generators (G1-G4) der zweite Elektromotor (108a-h) jedes Rotors dazu ausgelegt ist, in einem aktiven Modus betrieben zu werden, und im Betrieb der erste und der zweite Elektromotor (106a-h, 108a-h) den Propeller (110a-h) antreiben.

3. Architektur nach einem der vorstehenden Ansprüche, wobei die elektrischen Generatoren (G1-G4) mindestens eine Batterie oder eine Brennstoffzelle oder einen Turbogenerator umfassen.

4. Architektur nach einem der vorstehenden Ansprüche, wobei der erste und der zweite Elektromotor (106a-h, 108a-h) jedes Rotors (R1_2, R2_1, R3_4, R4_3, R5_6, R6_5, R7_8, R8_7) unterschiedliche Abmessungen aufweisen.

5. Architektur nach einem der vorstehenden Ansprüche, wobei die Rotoren eines Rotorpaars diagonal gegenüberliegend im Luftfahrzeug eingerichtet sind.

6. Senkrecht startendes und landendes Luftfahrzeug mit mehreren Rotoren, umfassend eine elektrische propulsive Architektur nach einem der vorstehenden Ansprüche.

7. Verfahren zum Steuern einer elektrischen propulsiven Architektur für ein senkrecht startendes und landendes Luftfahrzeug mit mehreren Rotoren nach einem der Ansprüche 1 bis 5, umfassend den Schritt, der für jeden Rotor aus Folgendem besteht:
- einen Betrieb des ersten Elektromotors (106a-h) in einem aktiven Modus,
wobei das Verfahren **dadurch gekennzeichnet ist, dass** es weiter den Schritt umfasst, der für jeden Rotor aus Folgendem besteht:
- einen Betrieb des zweiten Elektromotors (108a-h) in einem Schlafmodus.

8. Verfahren nach dem vorstehenden Anspruch, umfassend den Schritt, der im Falle eines Defekts eines ersten Elektromotors (106a-h) eines Rotors, eines Rotors (R1_2, R2_1, R3_4, R4_3, R5_6, R6_5, R7_8, R8_7), oder eines elektrischen Generators (G1-G4) aus einem Austritt aus dem Betrieb des zweiten Elektromotors (108a-h) jedes Rotors in einem Schlafmodus, dann einem Betrieb des zweiten Elektromotors (108a-h) jedes Rotors in einem aktiven Modus besteht.

## Claims

1. Electric propulsion architecture for a multi-rotor vertical take-off and landing aircraft, comprising:
- N electric generators (G1-G4), N being an integer greater than or equal to 2,
- N pairs of rotors (R1_2 - R2_1; R3_4 - R4_3; R5_6 - R6_5; R7_8 - R8_7), **characterised in that** the architecture further comprises:
- for each rotor, a first electric motor (106a-h) and a second electric motor (108a-h), the first electric motor (106a-h) being configured to operate in an active mode and the second electric motor (108a-h) being configured to be in a standby mode and being able to operate in an active mode in a breakdown situation,
- for each rotor, a propeller (110a-h) coupled to the first and second electric motors (106a-h, 108a-h) so that, in operation, the first electric motor (106a-h) drives the propeller,
wherein, for each pair of rotors (R1_2 - R2_1; R3_4 - R4_3; R5_6 - R6_5; R7_8 - R8_7), one of N electric generators powers the first electric motors (106a-h) of the rotors of a pair of rotors, and another of the N electric generators powers the second electric motors (108a-h) of the rotors of a pair of rotors,
and wherein the rotors form counter-rotors (R1_2 - R6_5; R2_1 - R5_6; R3_4 - R8_7; R4_3 - R7_8), and for each counter-rotor, the first and second electric motors (106a-h, 108a-h) of the rotors of each counter-rotor are each powered by one of N electric generators (G1-G4) so that the N electric generators power the first and second electric motors (106a-h, 108a-h) of the rotors of each counter-rotor.

2. Architecture according to the preceding claim, wherein in case of breakdown of a first electric motor (106a-h) of a rotor, of a rotor (R1_2, R2_1, R3_4, R4_3, R5_6, R6_5, R7_8, R8_7), or of an electric generator (G1-G4), the second electric motor (108a-h) of each rotor is configured to operate in an active mode, and in operation, the first and second electric motors (106a-h, 108a-h) drive the propeller (110a-h).

3. Architecture according to one of the preceding claims, wherein the electric generators (G1-G4) comprise at least one battery, or a fuel cell, or a turbo generator.

4. Architecture according to one of the preceding claims, wherein the first and second electric motors (106a-h, 108a-h) of each rotor (R1_2, R2_1, R3_4, R4_3, R5_6, R6_5, R7_8, R8_7) have different dimensions.

5. Architecture according to one of the preceding claims, wherein the rotors of a pair of rotors are arranged diagonally opposite in the aircraft.

6. Multi-rotor vertical take-off and landing aircraft comprising an electric propulsion architecture according to one of the preceding claims.

7. Method for controlling an electric propulsion architecture for a multi-rotor vertical take-off and landing aircraft according to one of claims 1 to 5, comprising the step consisting of, for each rotor:
- an operation of the first electric motor (106a-h) in an active mode,
said method being **characterised in that** it further comprises the step consisting of, for each rotor:
- an operation of the second electric motor (108a-h) in a standby mode.

8. Method according to the preceding claim, comprising the step consisting of, in case of breakdown of a first electric motor (106a-h) of a rotor, of a rotor (R1_2, R2_1, R3_4, R4_3, R5_6, R6_5, R7_8, R8_7), or of an electric generator (G1-G4), an output of the operation in a standby mode of the second electric motor (108a-h) of each rotor, then an operation of the second electric motor (108a-h) of each rotor in an active mode.
